# EUROPEAN PATENT APPLICATION

(11) **EP 4 671 640 A1**
(43) Date of publication of application: **31.12.2025**
(21) Application number: 24184728.4
(22) Date of filing: 26.06.2024
(51) Int. Cl.: F24S 25/12, F24S 25/617, H02S 20/10

(54) **FRAME MODULE FOR MOUNTING SOLAR PANEL AND SOLAR PANEL FRAME**

(71) Applicant: Procons Oy Ab, 66100 Malax (FI)
(72) Inventor: West, Johnny Klas-Erik, 66100 Malax (FI); Käldman, Leif, 66100 Malax (FI)
(74) Representative: Kolster Oy Ab

(57) **Abstract**

A frame module (1) for mounting solar panels, the frame module (1) comprising a panel mounting frame (2) comprising a panel bearing member (21) configured to support a solar panel thereon, a front strut member (3) and a rear strut member (4), wherein a first end of the front strut member (3) and a first end of the rear strut member (4) are connected to the panel mounting frame (2), wherein the frame module (1) further comprises at least two foundation rails (8,9), each foundation rail (8,9) is attached to at least one leg (7), wherein the leg (7) of the first foundation rail (8) is attached to a second end of the front strut member (3), and the leg (7) of the second foundation rail (9) is attached to a second end of the rear strut member (4).

## Description

### Background

The invention relates to a solar panel frame and in particular to frame modules for mounting solar panels.

Solar panels are commonly used for collecting solar energy from natural sunlight. Solar panels can be mounted on roofs or on the ground. When mounted on the ground, there are several ways depending on the soil composition. One of the most common ways is to provide a concrete foundation by excavating holes on the ground and pouring concrete into the holes which gives stability to the frame. The disadvantages are that the concrete take days to cure, are labour intensive, and require the steel post to be embedded the full depth of the concrete foundation.

Another common way is to drive steel piles which do not require concrete. However, they have high costs due to mobilizing the pile driving equipment, and the depth to which the piles are driven is typically deeper than concrete foundation which increases the potential for running into cobbles, boulders, or bedrock. The deeper depth requirement also rules out their use on most landfill sites, areas with rocky terrain, and areas with shallow bedrock. Therefore, steel piles are not suitable for some of the soils.

Additionally, above-mentioned solutions are not suitable for soft soils, such as peat, as there is a high risk of concrete or steel piles sinking or shifting in the ground.

### Brief disclosure

An object of the invention is thus to provide an alternative solution for mounting solar panels on the ground that solves the aforementioned problems and also decreases the carbon footprint. The invention is based on providing at least two foundation rails which are buried in the soil without using concrete or having deep steel piles. This allows mounting the solar panel frames into all kinds of soil excluding bedrock.

### Brief description of the drawings

The invention will now be described in more detail in connection with preferred embodiments and with reference to the accompanying drawings, in which:
Figure 1 illustrates a side view of a frame module according to an embodiment;
Figure 2 illustrates a perspective view of multiple frame modules according to an embodiment;
Figure 3 shows a closer view of a section of a frame module of Figure 2;
Figure 4 illustrates a closer view of a part of Figure 3;
Figure 5 illustrates a perspective view of foundation rails according to an embodiment;
Figure 6 illustrates a closer view of a part of Figure 5;
Figure 7 illustrates another closer view of a part of Figure 5;
Figure 8 illustrates several foundation rails according to an embodiment;
Figure 9 illustrates a connection between the foundation rails of Figure 8;
Figure 10 illustrates a connection between the horizontal beams according to an embodiment;
Figure 11 illustrates some examples of cross-sectional shapes of the foundation rail.

### Detailed description of embodiments

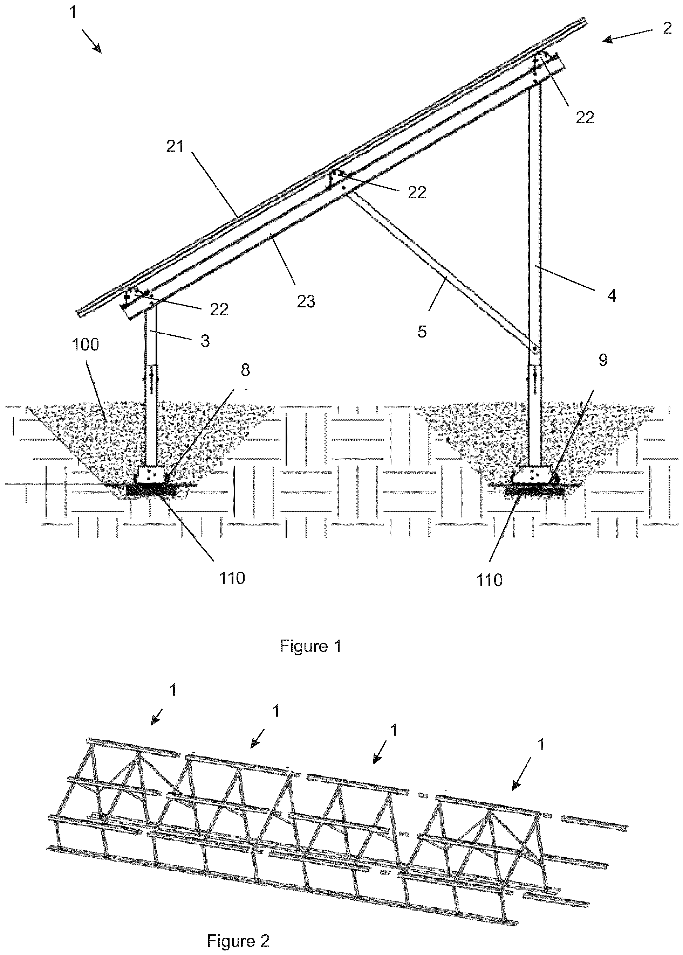

The present invention pertains to a solar panel frame and in particular to frame modules 1 for mounting solar panels. Figure 1 illustrates a side view of a frame module 1 according to an embodiment, wherein the frame module 1 is partially buried under ground. The filling layer 100 can be local soil which has been excavated from the site and backfilled after inserting the frame module 1. A layer 110 of frost insulation and structural fill according to local conditions and requirements may be laid below the frame module 1.

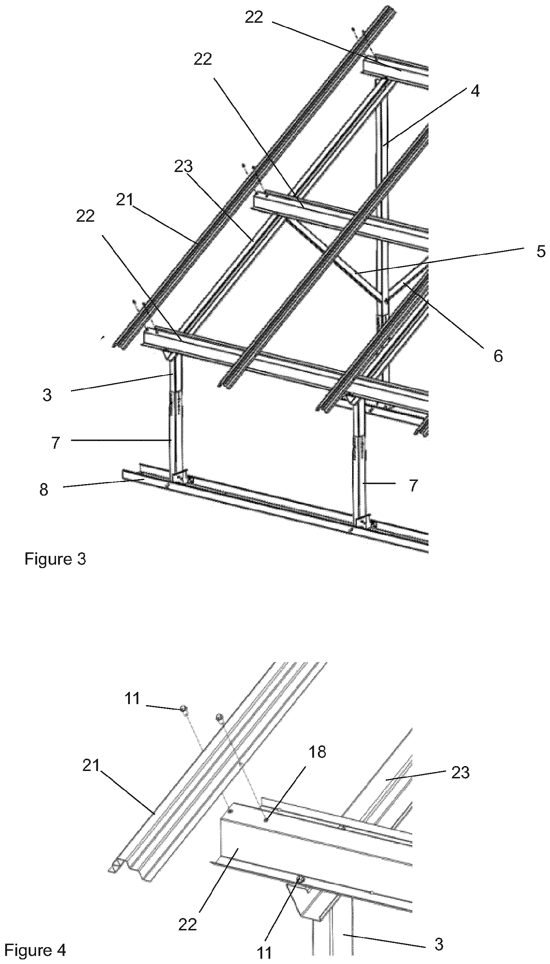

Figure 2 illustrates a perspective view of multiple frame modules 1 according to an embodiment and Figure 3 illustrates a closer view of a section of a frame module 1 of Figure 2 and Figure 4 illustrates a closer view of a part of Figure 3. The frame module 1 comprises a panel mounting frame 2 comprising a panel bearing member 21 configured to support a solar panel thereon. The solar panel may be directly installed on the panel bearing member 21, for example using fastening holes and fasteners such as screws and bolts (not shown).

The frame module 1 further comprises a front strut member 3 and a rear strut member 4, wherein the panel mounting frame 2 is attached to them. The front strut member 3 and the rear strut member 4 may be vertical or parallel to each other. The front strut member 3 may be shorter than the rear strut member 4 for forming a slope for the panel mounting frame 2. The slope angle is typically between 30 degrees and 45 degrees so the maximum average output from the solar power panel can be obtained throughout the year.

The panel bearing member 21 may be a longitudinally bent metal sheet having multiple edges. In Figure 4, the panel bearing member 21 is illustrated to have a cross section with eight bent corners similar to a podium. However, it can have other shape of cross section such as U- or C-shaped or top hat cross section.

A first end of the front strut member 3 and a first end of the rear strut member 4 are connected to the panel mounting frame 2. They may be directly connected to the panel bearing member 21, or via multiple horizontal beams 22 and support beams 23. The support beams 23 may be parallel to the panel bearing member 21. The horizontal beams 22 and support beams 23 provide a better stability and rigidity to the panel mounting frame 2. The horizontal beams 22 may be manufactured of a steel sheet beam having a cross section of a top hat or omega, for example. The support beams 23 may be manufactured from C-beams, for example. However, other beams may be used.

As illustrated in Figure 4, the support beam 23 may be directly fastened to the front strut member 3, for example with fastening holes 18 and fasteners 11 such as screws and bolts. The horizontal beam 22 may be directly fastened to the support beam 23, for example with fastening holes 18 and fasteners 11 such as screws and bolts. The panel bearing member 21 may be directly fastened to the horizontal beam 22, for example with fastening holes 18 and fasteners 11 such as screws and bolts. However, in some embodiments, horizontal beams 22 and support beams 23 are not necessary.

The frame module 1 may further comprise a brace 5 with one end connected to middle section of the support beam 23 and another end the rear strut member 4. The brace 5 can be manufactured from C-beam, for example. However, other type of beams may be used. The brace 5 can be fastened to the support beam 23 and the rear strut member 4 with at least one fastener, such as screw and bolt. However, it can also be fastened by welding. The brace 5 ads more support and rigidity to the frame module.

The frame module 1 may further comprise a rear brace 6 connected to adjacent rear strut members 4. The rear brace 6 may be made of same type of beam as the brace 5, or different. The rear brace 6 may have one end connected to the first rear strut 4 member and another end connected to the second rear strut member 4. The rear brace 6 may form 40-50 degree, preferably 45-degree angle with the first rear strut member 4. An adjacent rear brace 6 may form 80-100 degree, preferably 90-degree angle with the first rear brace 6. The rear brace 6 can be fastened to the rear strut member 4 with fasteners, such as screws and bolts. However, it can also be fastened by welding. The rear brace 6 further ads more support and rigidity to the frame module.

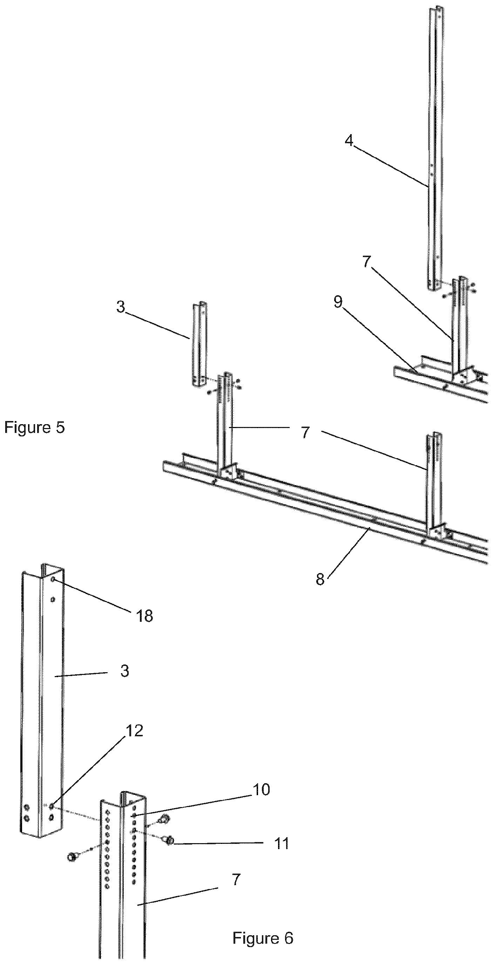

Figure 5 illustrates a perspective view of foundation rails 8, 9 according to an embodiment. The frame module 1 further comprises at least two foundation rails 8,9, wherein each foundation rail 8, 9 is attached to at least one leg 7, wherein one leg 7 is arranged between the front strut member 3 and the first foundation rail 8, and another leg 7 is arranged between the rear strut member 4 and the second foundation rail 9. The leg 7 of the first foundation rail 8 is attached to a second end of the front strut member 3, and the leg 7 of the second foundation rail 9 is attached to a second end of the rear strut member 4. The legs 7 may be identical to each other by having the same length and shape. However, in some embodiments, the legs 7 may have different length and/or shape.

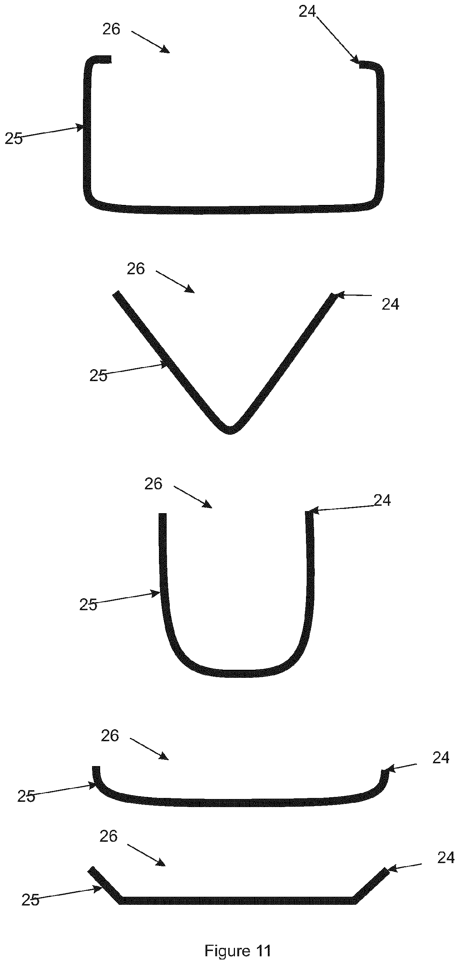

The foundation rail 8, 9 is preferably made by bending or roll-forming a metal sheet, such as a carbon steel, galvanized steel or stainless steel. Figure 11 illustrates some examples of cross-sectional shapes of the foundation rail wherein longitudinal edges 24 of the foundation rails are located higher than a middle section 25. This includes (from top to bottom in Figure 11) C-shape, V-shape, U-shape, concave-shape, and isosceles trapezium-shape wherein side walls form bigger than 90-degree angle with the bottom wall. The foundation rails 8, 9 may have an open wall 26 at the top which allows the backfill 100 to at least partially fill the inner part of the foundation rails 8, 9.

Bent and roll-formed foundation rails 8, 9 provide a light-weight structure which are not needed to support the weight of the solar panel frame. Instead, the backfill 100 on top of the foundation rails 8, 9 serves as the weight holding the solar panel frame in place. Depending on the depth and composition of the soil, deeper backfill 100 may require narrower foundation rails 8, 9 with narrow open wall 26, and shallower backfill 100 may require wider foundation rails 8, 9 with wider open wall 26. Additionally, depending on measured wind speed of the area, the shape, width and depth of the foundation rails 8, 9 may be customized so the backfill 100 provides sufficient weight on top of the foundation rails 8, 9.

The leg 7 may the manufactured from same material and same method as the foundation rail 8, 9. In the accompanying Figures, the leg 7 is illustrated as a C-beam. The front strut member 3 or the rear strut member 4 may have a smaller diameter than diameter of the leg 7 so that the front strut member 3 or the rear strut member 4 is arranged to slide inside the leg 7 during assembly. Alternatively, the front strut member 3 or the rear strut member 4 may have a larger diameter than diameter of the leg 7 so that the leg 7 is arranged to slide inside the front strut member 3 or the rear strut member 4 during assembly. However, the leg 7 may be manufactured from other type of beams, for example square hollow beams or one having a cross-sectional shape illustrated in Figure 11. The leg 7 may be attached to the front strut member 3 or the rear strut member 4 for example using fastening holes 18 and fasteners 11 such as screws and bolts.

Figure 6 illustrates a closer view of a part of Figure 5 relating to the leg 7 and attachment of the front strut member 3 or the rear strut member 4 to the leg 7. The leg 7 may comprise adjusting means at one end of the leg 7, said end being towards the front strut member 3 or the rear strut member 4 for adjusting height thereof in relation to the leg 7. The ground may be uneven so it may be necessary to adjust the height of the front strut member 3 or the rear strut member 4 for the maximum average output from the solar power panel. In the accompanying Figures 5-6, the adjusting means is illustrated as a row of apertures 10 at different height at upper end of the leg 7 for fasteners 11 and the front strut member 3 or the rear strut member 4 has corresponding apertures 12 for aligning the apertures 10 of the leg 7. Said row of apertures 10 may be at more than two different heights, preferably more than ten different heights. Said corresponding apertures 12 may be at one or two or more different heights. Screws may be used as fasteners 11 to fasten the front strut member 3 or the rear strut member 4 to the leg 7. Alternatively, the row of apertures 10 and the corresponding apertures 12 may be located other way round such that the row of apertures 10 are located on the front strut member 3 or the rear strut member 4, and the corresponding apertures 12 are located on the leg 7. In case of the C-beam, said row of apertures 10 and the corresponding apertures 12 may be arranged on three different sides. In case of square hollow beams, said row of apertures 10 and the corresponding apertures 12 may be arranged on four different sides. In some embodiments, the adjusting means may comprise a sliding joint or other solution capable of adjusting the height of the front strut member 3 or the rear strut member 4 in relation to the leg 7.

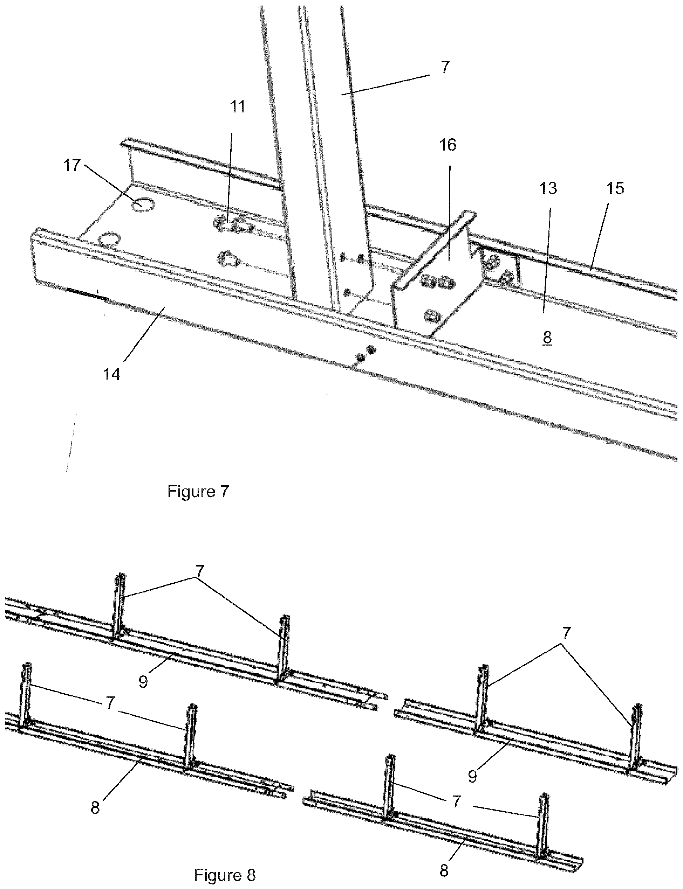

Figure 7 illustrates another closer view of a part of Figure 5 relating to the connection of the foundation rail 8, 9 and the leg 7. The foundation rail 8, 9 may have C-shaped cross section wherein width of the foundation rail 8, 9 is larger than width of the leg 7. In the accompanying Figures, the foundation rail 8, 9 is manufactured of a C-beam in such a way that the bottom wall 13, also known as web, is facing downwards, and two side walls 14 are facing towards sides. There may additionally be two flanges 15, extending from the side walls 14, which are parallel to the bottom wall 13.

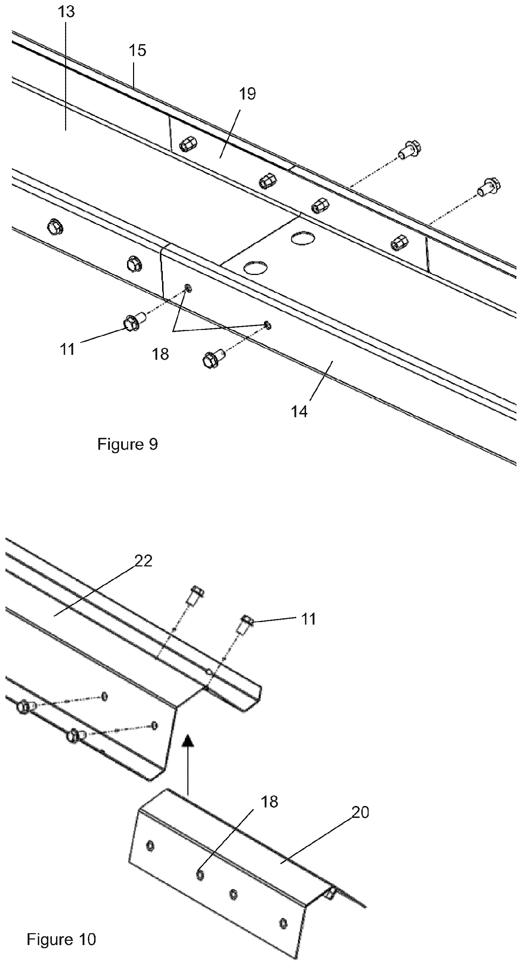

The leg 7 may be attached to the foundation rail 8, 9 via a connecting piece 16 and fasteners 11. The connecting piece 16 may be directly connected to an inner side surface of the side walls 14 of the foundation rail 8, 9 and an outer surface of the leg 7. The connecting piece 16 may have a middle section which is connected to the leg via at least one fastener 11, and two opposing side sections, which are bent approximately 90 degrees in relation to the middle section, connected to the inner side surfaces of the side walls 14 of the foundation rail 8, 9 via at least one fastener 11. In Figure 9, it is illustrated that the fastener 11 is a type of a screw with a bolt arrangement. It can be similar to the ones in the previous Figures. The middle section may utilise three fasteners 11 and the side sections each may utilise two fasteners 11. However, other number of fasteners 11 can be used. In case the foundation rail 8, 9 has another cross-sectional shape than C, the connecting piece 16 may be directly connected to any inner surface of the foundation rail 8, 9 and configured to rigidly connect the leg 7 to the foundation rail 8, 9. The foundation rail 8, 9 can alternatively be attached to the leg 7 using other connection solutions, for example by welding, wherein the connecting piece 16 may be unnecessary.

Figure 8 illustrates several foundation rails 8, 9 according to an embodiment and Figure 9 illustrates a connection between the foundation rails 8, 9 of Figure 8. The foundation rail 8 at the front may be identical to the foundation rail at the rear. The foundation rail 8, 9 may comprise fastening holes 18. At one longitudinal end of the foundation rail 8, 9 at least one bottom aperture 17 for draining rainwater may be arranged at the bottom wall 13 of the foundation rail 8, 9. In some embodiments, one bottom aperture 17 may be arranged at one end of the foundation rail 8, 9 and two bottom apertures 17 may be arranged at another end of the foundation rail 8, 9. By providing different number of the bottom apertures 17, it may help installers to install the frame modules 1 in correct way in relation to each other. At another longitudinal end, or both longitudinal ends, of the foundation rail 8, 9, at least one fastening hole 18 may be arranged at side walls 14 of the foundation rail 8, 9.

The frame modules 1 can be connected to each other at the foundation rails 8, 9 using a connector plate 19. The connector plate 19 can be a metal plate having multiple fastening holes 18 for fasteners 11, such as screws and bolts. In Figure 9, the connector plate 19 is illustrated as a rectangular plate and to have a height same or smaller than the side wall 14 and arranged to fit between the bottom wall 13 and the flange 15 but in other embodiments, the connector plate 19 may have other shapes or fastened to any inner surface of the foundation rail 8, 9. The connector plate 19 may have at least two fastening holes 18 so that one is used to fasten the connector plate 19 to the first foundation rail 8, 9 and another fastening hole 18 is used to fasten the connector plate 19 to the adjacent foundation rail 8, 9. In the Figure 9, four fastening hole 18 are used to securely fasten the adjacent foundation rails 8, 9 together, but other numbers can be used. A second connector plate 19 may be used on the opposite side wall 14. The connector plate 19 may alternatively be fastened at the outer surface of the side wall 14. However, in some embodiments, there is no need for the connector plate 19, and connecting the foundation rails 8, 9 may be implemented by welding.

According to the above arrangement, a solar panel frame may comprise several frame modules depending on the available area for mounting the solar panel frames. In yet another embodiment illustrated in Figure 10, the frame modules 1 may be connected to each other at the panel mounting frame 2, for example by connecting the horizontal beams 22 to each other using a connector plate 20 or welding. The connector plate 20 may have a smaller diameter than the horizontal beam 22 and the connector plate 20 may overlap with each other and be fastened together using fastening holes 18 for fasteners 11. Similar to the connector plate 19 at the foundation rail 8, 9, the connector plate 20 may alternatively have larger diameter than the horizontal beam 22, or the connection may be implemented by welding. In some embodiments, the frame modules 1 can be connected to each other both at the horizontal beams 22 and at the foundation rails 8, 9.

Some advantages of the present invention are to mount the solar panel frame in a modular and environmentally friendly manner. Modular construction saves time and on-site labour. The frame modules allow a wide range of design based on the available area so it's easily customizable. The frame modules can be reused by removing the backfill and disassembling the solar panel frame into frame modules 1. By using the foundation rails 8, 9, there is no need to dispose or recycle the concrete or steel piles. Foundation rails also allow mounting the solar panel frame into all kinds of soil excluding bedrock. This includes fields, peat and moraine. The weight of the backfill laid on top of the foundation rails keeps the solar panel frames rigidly and securely in place.

### Reference number

- 1: frame module
- 2: panel mounting frame
- 3: front strut member
- 4: rear strut member
- 5: brace
- 6: rear brace
- 7: leg
- 8: foundation rail
- 9: foundation rail
- 10: row of apertures
- 11: fastener
- 12: corresponding aperture
- 13: bottom wall
- 14: side wall
- 15: flange
- 16: connecting piece
- 17: bottom aperture
- 18: fastening hole
- 19: connector plate
- 20: connector plate
- 21: panel bearing member
- 22: horizontal beam
- 23: support beam

## Claims

1. A frame module for mounting solar panels, the frame module comprising
a panel mounting frame comprising a panel bearing member configured to support a solar panel thereon,
a front strut member and a rear strut member, wherein a first end of the front strut member and a first end of the rear strut member are connected to the panel mounting frame,
wherein the frame module further comprises at least two foundation rails, each foundation rail is attached to at least one leg, wherein the leg of the first foundation rail is attached to a second end of the front strut member, and the leg of the second foundation rail is attached to a second end of the rear strut member,
wherein said foundation rails are made by bending or roll-forming.

2. The frame module according to claim 1, wherein the panel mounting frame further comprises a horizontal beam and a support beam parallel to the panel bearing member, wherein the panel bearing member is connected to the front strut member or the rear strut member via the horizontal beam and the support beam.

3. The frame module according to claim 2, wherein the frame module further comprises a brace connected to middle section of the support beam and the rear strut member.

4. The frame module according to claim 2 or 3, wherein the frame module further comprises a rear brace connected to adjacent rear strut members.

5. The frame module according to any one of claims 1-4, wherein the front strut member is shorter than the rear strut member for forming a slope for the panel bearing member.

6. The frame module according to any one of claims 1-5, wherein the foundation rail has a cross-sectional shape where longitudinal edges of the foundation rails are located higher than a middle section.

7. The frame module according to any one of claims 1-6, wherein the foundation rail comprises fastening holes.

8. The frame module according to any one of claims 1-7, wherein the leg is made of C-shaped beam.

9. The frame module according to any one of claims 1-8, wherein the leg is attached to the foundation rail via a connecting piece and fasteners.

10. The frame module according to claim 9, wherein the connecting piece is directly connected to inner side surfaces of the foundation rail and an outer surface of the leg.

11. The frame module according to any one of claims 1-10, wherein the front strut member or the rear strut member has a smaller diameter than diameter of leg and is arranged to slide inside the leg during assembly.

12. The frame module according to claim 11, wherein the leg comprises adjusting means at one end of the leg towards the front strut member or the rear strut member for adjusting height thereof.

13. The frame module according to claim 12, wherein the adjusting means is a row of apertures at different height for fasteners and the front strut member or the rear strut member has corresponding apertures for aligning the apertures of the leg.

14. A solar panel frame, comprising a plurality of frame modules according to claim 1 connected to each other.

15. The solar panel frame according to claim 14, wherein the frame modules are connected to each other at the foundation rails using a connector plate.
